# EUROPÄISCHE PATENTSCHRIFT

(11) **EP 3 869 090 B1**
(45) Veröffentlichungstag und Bekanntmachung des Hinweises auf die Patenterteilung: **01.04.2026**
(21) Anmeldenummer: 20158250.9
(22) Anmeldetag: 19.02.2020
(51) Int. Cl.: F21S 43/241, F21S 43/239, F21S 43/243, F21S 43/14, B60Q 1/28, B60R 13/00, G09F 21/04, G09F 13/04, F21V 8/00, G09F 13/22

(54) **BAUGRUPPE ZUR BELEUCHTETEN DARSTELLUNG EINES EMBLEMS FÜR EIN KRAFTFAHRZEUG**
ASSEMBLY FOR ILLUMINATED DISPLAY OF AN EMBLEM FOR A MOTOR VEHICLE
MODULE DE REPRÉSENTATION ÉCLAIRÉE D'UN EMBLÈME POUR UN VÉHICULE AUTOMOBILE

(43) Veröffentlichungstag der Anmeldung: 25.08.2021
(73) Patentinhaber: ZKW Group GmbH, 3250 Wieselburg (AT)
(72) Erfinder: Wagner, Florian, 3300 Winklarn (AT); Mitterlehner, Stefan, 3240 Mank (AT); Salzer, Michael, 3261 Zarnsdorf (AT); Brunner, Michael, 3650 Pöggstall (AT); Maier, Christian, 3281 Oberndorf an der Melk (AT)
(74) Vertreter: Patentanwaltskanzlei Matschnig & Forsthuber OG

(56) Entgegenhaltungen:
- CN-A- 107 599 995
- DE-A1- 102011 016 415
- GB-A- 2 458 302
- JP-A- 2006 044 330
- JP-A- 2011 063 169
- JP-A- 2013 103 701
- JP-B2- H07 120 485
- US-A1- 2019 001 878
- US-A1- 2019 299 880

## Beschreibung

Die Erfindung betrifft eine Baugruppe zur beleuchteten Darstellung eines Emblems für ein Kraftfahrzeug, umfassend:
- einen Emblemkörper, welcher auf einer Sichtseite ein opakes Emblem aufweist,
- eine Beleuchtungseinheit, umfassend
   - zumindest eine Lichtquelle,
   - eine Lichtleiteranordnung zur Führung des von der zumindest einen Lichtquelle emittierbaren und in die Lichtleiteranordnung einkoppelbaren Lichts, wobei die Lichtleiteranordnung zur Einkopplung von Licht zumindest einen Einkoppelabschnitt, welcher der zumindest einen Lichtquelle zugeordnet ist, und zumindest einen Lichtleiter, welcher sich ausgehend von dem Einkoppelabschnitt erstreckt, umfasst,
   und wobei der zumindest eine Lichtleiter zumindest einen Auskoppelabschnitt zur Auskopplung zumindest eines Teils des eingekoppelten Lichtes umfasst,

wobei die Beleuchtungseinheit auf einer der Sichtseite abgewandten Seite an dem Emblemkörper angeordnet ist, wobei die Lichtleiteranordnung im Wesentlichen der Form des Emblems folgt, und wobei der Emblemkörper einen Rand aufweist, welcher die maximale Ausdehnung des Emblemkörpers in Lichteinkoppelrichtung bestimmt,
und wobei der Auskoppelabschnitt des zumindest einen Lichtleiters dem Rand des Emblemkörpers in Lichteinkoppelrichtung vorsteht, sodass Licht quer zur Lichteinkoppelrichtung aus dem Lichtleiter auskoppelbar ist.

Die Erfindung betrifft weiters ein Kraftfahrzeug mit zumindest einer erfindungsgemäßen Baugruppe.

Kraftfahrzeuge sind üblicherweise außen auf der Karosserie mit einem Emblem versehen, welches das Logo des Herstellers darstellt.

Dafür sind in der Regel dicke und größere Aufbauten notwendig, um ein möglichst stabiles Emblem bzw. eine Baugruppe, die ein solches Emblem umfasst, zu erhalten, welches den Anforderungen, wie Witterungsbeständigkeit, Vibrationsbeständigkeit, usw., gerecht wird.

Ferner ist es bei beleuchteten Emblemen wünschenswert, dass das bereits vorhandene Logo bzw. Emblem eines Herstellers weiterhin verwendbar bleibt, ohne dass Änderungen am Design oder Aufbau der Embleme bzw. Logos erforderlich sind.

Die JP 2006 044330 A zeigt eine Baugruppe aus dem Stand der Technik.

Es ist eine Aufgabe der Erfindung eine verbesserte Baugruppe bereitzustellen.

Diese Aufgabe wird dadurch gelöst, dass der zumindest eine Lichtleiter Streupartikel umfasst, welche einen homogenen Leuchteindruck des aus dem zumindest einen Lichtleiter (320) auskoppelbaren Lichts ermöglichen, wobei die Streupartikel als im Lichtleiter homogen verteilte Streupartikel ausgebildet sind.

Dadurch ist eine sehr flache Bauweise der Lichtleiteranordnung und somit der gesamten Baugruppe realisierbar.

Die zumindest eine Lichtquelle, vorzugsweise als LED ausgebildet, kann eingerichtet sein, Licht nicht nur in Lichteinkoppelrichtung zu emittieren, sondern auch quer zur Lichteinkoppelrichtung, welches Licht ebenfalls in den zumindest einen Lichtleiter einkoppelbar ist.

Unter dem Begriff "Sichtseite" ist diejenige Seite gemeint, welche einem äußeren Betrachter zugänglich ist und auf welcher das darzustellende Emblem, beispielsweise ein Logo eines Kraftfahrzeugherstellers, zu sehen ist.

Es kann vorgesehen sein, dass die Beleuchtungseinheit zumindest eine Umlenkeinrichtung umfasst, welche zur Umlenkung des eingekoppelten Lichtes zu dem zumindest einen Auskoppelabschnitt des Lichtleiters vorgesehen ist, wobei die Umlenkeinrichtung zumindest eine Reflexionsfläche umfasst, welche dem zumindest einen Lichtleiter zugeordnet ist und eingerichtet ist, das in einer Lichteinkoppelrichtung eingekoppeltes Licht der zumindest einen Lichtquelle durch Reflexion in eine Umlenkrichtung im Lichtleiter umzulenken.

Sobald das Licht durch den Einkoppelabschnitt in die Lichtleiteranordnung gelangt und durch die Umlenkeinrichtung in einer Umlenkrichtung umgelenkt wurde, kann sich das Licht bzw. die Lichtstrahlen mittels Totalreflexion an einer Mantelfläche des Lichtleiters weiter innerhalb des Lichtleiters selbst fortpflanzen hin zum entsprechenden Auskoppelabschnitt.

Es kann vorgesehen sein, dass der zumindest eine Auskoppelabschnitt des Lichtleiters als Randbereich der Lichtleiteranordnung dem Emblemkörper quer zur Lichteinkoppelrichtung der Lichtquelle übersteht.

Es kann vorgesehen sein, dass der zumindest eine Lichtleiter als bögenförmiger Lichtleiter ausgebildet ist.

Es kann vorgesehen sein, dass zumindest ein Lichtleiter oder mehrere Lichtleiter als ein geschlossener ringförmiger, insbesondere kreisringförmiger, Lichtleiter ausgebildet ist.

Dabei können mehrere Umlenkeinrichtungen in unterschiedlicher Ausführung, also mit beispielsweise zwei Reflexionsflächen und/oder mit vier Reflexionsflächen in einem geschlossenen ringförmigen Lichtleiter angeordnet sein.

Beispielsweise können auch zwei oder mehr Lichtleiter einen geschlossenen ringförmigen, insbesondere kreisförmigen Lichtleiter bilden.

Es kann vorgesehen sein, dass der Einkoppelabschnitt als Kollimator ausgebildet ist.

Die Lichteinstrahlstelle kann als Kollimator ausgebildet sein, der eingerichtet ist, die einfallenden Lichtstrahlen parallel auszurichten und auf die Reflexionsfläche(n) zu lenken.

Es kann vorgesehen sein, dass zumindest zwei oder mehrere Umlenkeinrichtungen vorgesehen sind.

Es kann vorgesehen sein, dass die zumindest eine Umlenkeinrichtung vier Reflexionsflächen aufweist, wobei jeder Reflexionsfläche ein Lichtleiter zugeordnet ist.

Dabei kann vorgesehen sein, dass bei Vorhandsein mehrerer Umlenkeinrichtungen zumindest eine Umlenkeinrichtung vier Reflexionsflächen aufweist, wobei jeder Reflexionsfläche ein Lichtleiter zugeordnet ist.

Es kann vorgesehen sein, dass die Umlenkeinrichtung als vierseitige Pyramide ausgebildet ist, wobei die Reflexionsflächen als Seiten der Pyramide ausgebildet sind.

Es sei angemerkt, dass darunter zu verstehen ist, dass die Pyramide in Form einer Einkerbung oder Ähnliches in dem Lichtleiter bzw. der Lichtleiteranordnung entsteht.

Es kann vorgesehen sein, dass die Baugruppe mittels einem doppelseitigen Klebeband an einem Kraftfahrzeug befestigbar ist.

Es kann vorgesehen sein, dass die Baugruppe zumindest einen Stecker zur elektrischen Kontaktierung umfasst, welcher Stecker sich in Richtung der Lichteinkoppelrichtung erstreckt und an einen Gegenstecker eines Kraftfahrzeugs ansteckbar ist.

Es kann auch vorgesehen sein, dass die Baugruppe zur elektrischen Kontaktierung mittels einem Kabel, welches durch eine Karosserie eines Kraftfahrzeuges geführt ist, elektrisch verbunden ist.

Es kann vorgesehen sein, dass die zumindest eine Lichtquelle als LED ausgebildet ist.

Es kann vorgesehen sein, dass die zumindest eine Lichtquelle auf einer Leiterplatte angeordnet ist, wobei die Leiterplatte zwischen der Lichtleiteranordnung und dem Emblemkörper angeordnet ist. Die Leiterplatte kann der Form des Emblems im Wesentlichen folgen.

Es kann vorgesehen sein, dass die Lichteinkoppelrichtung und die Umlenkrichtung orthogonal zueinander ausgerichtet sind.

Es kann vorgesehen sein, dass der zumindest eine Lichtleiter zumindest abschnittsweise mit einer reflektierenden metallischen Oberfläche versehen ist.

Beispielsweise kann eine Mantelfläche des zumindest einen Lichtleiters mit einer reflektierenden metallischen Oberfläche versehen sein oder nur jener Teil der Mantelfläche, welche der Sichtseite des Emblemkörpers abgewandt ist.

Es kann vorgesehen sein, dass der zumindest eine Lichtleiter auf einer der Sichtseite abgewandten Seite mit einer reflektierenden metallischen Oberfläche versehen ist.

Es ist vorgesehen, dass der zumindest eine Lichtleiter Streupartikel umfasst, welche einen homogenen Leuchteindruck des aus dem zumindest einen Lichtleiter auskoppelbaren Lichts ermöglichen. Aufgrund der im Lichtleiter vorhandenen Streupartikel ist die Fortpflanzung des Lichtes innerhalb des Lichtleiters durch Totalreflexion eingeschränkt, wodurch eine metallisierte Oberfläche zumindest abschnittsweise und/oder auf der der Sichtseite abgewandten Seite des Lichtleiters von Vorteil, da dadurch die Fortpflanzung des Lichtes innerhalb des Lichtleiters trotz der Streupartikel verbessert werden kann.

Es sei angemerkt, dass es sich bei obengenannten Streupartikel nicht um typische Auskoppelelemente eines Lichtleiters handelt, welche üblicherweise als Auskoppelprismen auf einer Seite des Lichtleiters eingearbeitet sind. Es handelt sich um homogen verteilte Streupartikel im Lichtleiter, vorzugsweise im gesamten Lichtleiter. Das Vorhandensein solcher Streupartikel erzeugt einen milchigen bzw. trüben Eindruck des Lichtleiters selbst bei Abwesenheit von Licht der Lichtquelle innerhalb des Lichtleiters.

Die Aufgabe wird ebenso gelöst durch ein Kraftfahrzeug mit zumindest einer erfindungsgemäßen Baugruppe.

Nachfolgend wird die Erfindung anhand von beispielhaften Zeichnungen näher erläutert. Hierbei zeigt
Fig. 1 zeigt eine beispielhafte Baugruppe mit einem Emblemkörper und einer Beleuchtungseinheit in einer Seitenansicht,
Fig. 2 eine Detailansicht der Beleuchtungseinheit, welche eine Lichtquelle und eine Lichtleiteranordnung umfasst, wobei ein Einkoppelabschnitt, in welchem Licht der Lichtquelle einkoppelbar ist, mit einer einer Umlenkeinrichtung, welche das eingekoppelte Licht in der Umlenkeinrichtung zugeordnete Lichtleiter umlenkt, gezeigt ist,
Fig. 3 einen schematischen Schnitt durch eine beispielhafte Baugruppe,
Fig. 4 einen schematischen Schnitt durch eine weitere beispielhafte Baugruppe, und
Fig. 5 eine Ansicht einer beispielhaften Lichtleiteranordnung in Richtung einer Lichteinkoppelrichtung einer Lichtquelle, wobei zwei Umlenkeinrichtungen und deren zugeordnete Lichtleiter zu sehen sind.

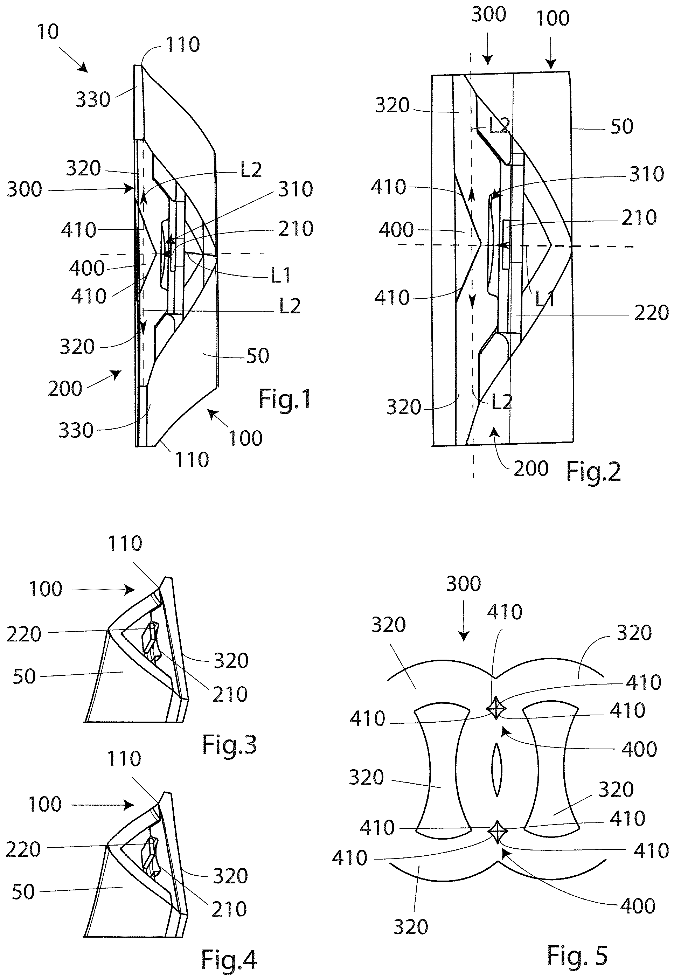

**Fig. 1** zeigt eine beispielhafte Baugruppe **10** zur beleuchteten Darstellung eines Emblems **50** für ein Kraftfahrzeug, wobei die Baugruppe einen Emblemkörper **100,** welcher auf einer Sichtseite das opake Emblem **50** aufweist, und eine Beleuchtungseinheit **200** umfasst.

Die Beleuchtungseinheit **200** umfasst mehrere Lichtquellen **210** (in den Figuren jeweils nur eine Lichtquelle gezeigt), welche als LED ausgebildet sind, und eine Lichtleiteranordnung **300** zur Führung des von Lichtquellen **210** emittierbaren und in die Lichtleiteranordnung **300** einkoppelbaren Lichts, wobei die Lichtleiteranordnung **300** zur Einkopplung von Licht für jede Lichtquelle einen Einkoppelabschnitt **310,** welcher der jeweiligen Lichtquelle **210** zugeordnet ist sowie als Kollimator ausgebildet sein kann, und mehrere Lichtleiter **320** (in Fig. 1 und Fig. 2 nur jeweils zwei Lichtleiter dargestellt), welcher sich ausgehend von dem Einkoppelabschnitt **310** erstreckt, umfasst.

Die Lichtleiter **320** umfassen jeweils einen Auskoppelabschnitt **330** zur Auskopplung zumindest eines Teils des eingekoppelten Lichtes, und für jeden Einkoppelabschnitt **310** eine Umlenkeinrichtung **400,** welche zur Umlenkung des eingekoppelten Lichtes zu den Auskoppelabschnitten **330** der Lichtleiter vorgesehen ist, wobei die Umlenkeinrichtung **400** in dem gezeigten Beispiel in **Fig. 1** und **2** zwei Reflexionsflächen **410** umfasst, welche jeweils einem Lichtleiter **320** zugeordnet sind und eingerichtet sind, das in einer Lichteinkoppelrichtung **L1** eingekoppeltes Licht der Lichtquelle **210** durch Reflexion in eine Umlenkrichtung **L2** im entsprechenden Lichtleiter **320** umzulenken. In den gezeigten Beispielen sind die Lichteinkoppelrichtung **L1** und die Umlenkrichtung **L2** orthogonal zueinander ausgerichtet. In den Lichtleitern **320** wird das Licht über Totalreflexion im Lichtleiter hin zu den jeweiligen Auskoppelabschnitten **330** geführt, wobei die Lichtleiter **320** zur verbesserten Führung des Lichts innerhalb der Lichtleiter zumindest abschnittsweise mit einer reflektierenden metallischen Oberfläche versehen sind.

Ferner ist die Beleuchtungseinheit **200** auf einer der Sichtseite abgewandten Seite an dem Emblemkörper **100** angeordnet, wie in **Fig. 1** zu sehen ist, wobei die Lichtleiteranordnung **300** im Wesentlichen der Form des Emblems **50** folgt, und wobei der Emblemkörper **100** einen Rand **110** aufweist, welcher die maximale Ausdehnung des Emblemkörpers **100** in Lichteinkoppelrichtung **L1** bestimmt, und wobei die Auskoppelabschnitte **330** der Lichtleiteranordnung **300** dem Rand **110** des Emblemkörpers **100** in Lichteinkoppelrichtung **L1** vorsteht, sodass Licht quer zur Lichteinkoppelrichtung **L1,** vorzugsweise in Richtung der Umlenkrichtung **L2,** aus dem Lichtleiter **320** auskoppelbar ist. Ferner ist die Lichtquelle bzw. die Lichtquellen **210** auf einer Leiterplatte **220** angeordnet, wobei die Leiterplatte **220** zwischen der Lichtleiteranordnung **300** und dem Emblemkörper **100** angeordnet ist, wie in den **Figuren 1** und **2** zu sehen ist.

**Fig. 3** und **Fig. 4** ist ein Schnitt durch eine beispielhafte Baugruppe dargestellt, wobei das zuvor geschriebene aus dem Beispiel aus **Fig. 1** und **Fig. 2** auch auf das Beispiel in **Fig. 3** und **Fig. 4** zutrifft. In den gezeigten Schnitten ist zu sehen, dass der Auskoppelabschnitt bzw. die Auskoppelabschnitte **330** der entsprechenden Lichtleiter **320** als Randbereich der Lichtleiteranordnung **300** dem Emblemkörper **100** quer zur Lichteinkoppelrichtung **L1** der Lichtquelle übersteht, was in **Fig. 3** dargestellt ist. **Fig. 4** zeigt eine Ausführungsform, in welcher die Auskoppelabschnitte **330** nicht in quer zur Lichteinkoppelrichtung **L1** überstehen.

**Fig. 5** zeigt einen Ausschnitt einer beispielhaften Lichtleiteranordnung **300** in einer Sicht in Lichteinkoppelrichtung einer Lichtquelle, wobei die Lichtleiteranordnung in **Fig. 5** zwei Umlenkeinrichtungen **400** umfasst, welche jeweils vier Reflexionsflächen **410** aufweisen, wobei jeder Reflexionsfläche **410** ein Lichtleiter **320** zugeordnet ist, wobei die Umlenkeinrichtungen **400** als vierseitige Pyramiden ausgebildet sind, wobei die Reflexionsflächen **410** als Seiten der jeweiligen Pyramide ausgebildet sind.

Ferner sind die Lichtleiter **320** in **Fig. 5** (auch in den zuvor beschriebenen Beispielen möglich) als bögenförmige Lichtleiter ausgebildet, wobei die Lichtleiter auch als ein geschlossener ringförmiger, insbesondere kreisringförmiger, Lichtleiter ausgebildet sein können. Beispielsweise können zwei oder mehr Lichtleiter einen geschlossenen ringförmigen, insbesondere kreisförmigen Lichtleiter bilden.

Es ist überdies vorgesehen die Baugruppe **10** auf einem Kraftfahrzeug zu befestigen, beispielsweise mittels einem doppelseitigen Klebeband an einer Karosserie des Kraftfahrzeuges.

Zur elektrischen Kontaktierung der Baugruppe **10,** insbesondere der Lichtquellen bzw. der Leiterplatte, kann die Baugruppe zumindest einen Stecker umfassen, welcher Stecker sich in Richtung der Lichteinkoppelrichtung **L1** der Lichtquellen erstreckt und an einen Gegenstecker eines Kraftfahrzeugs ansteckbar ist.

### BEZUGSZEICHENLISTE

| | |
|---|---|
| Baugruppe | 10 |
| Emblem | 50 |
| Emblemkörper | 100 |
| Rand | 110 |
| Beleuchtungseinheit | 200 |
| Lichtquelle | 210 |
| Leiterplatte | 220 |
| Lichtleiteranordnung | 300 |
| Einkoppelabschnitt | 310 |
| Lichtleiter | 320 |
| Auskoppelabschnitt | 330 |
| Umlenkeinrichtung | 400 |
| Reflexionsfläche | 410 |
| Lichteinkoppelrichtung | L1 |
| Umlenkrichtung | L2 |

## Patentansprüche

1. Baugruppe (10) zur beleuchteten Darstellung eines Emblems (50) für ein Kraftfahrzeug, umfassend:
- einen Emblemkörper (100), welcher auf einer Sichtseite ein opakes Emblem (50) aufweist,
- eine Beleuchtungseinheit (200), umfassend
- zumindest eine Lichtquelle (210),
- eine Lichtleiteranordnung (300) zur Führung des von der zumindest einen Lichtquelle (210) emittierbaren und in die Lichtleiteranordnung (300) einkoppelbaren Lichts, wobei die Lichtleiteranordnung (300) zur Einkopplung von Licht zumindest einen Einkoppelabschnitt (310), welcher der zumindest einen Lichtquelle (210) zugeordnet ist, und zumindest einen Lichtleiter (320), welcher sich ausgehend von dem Einkoppelabschnitt (310) erstreckt, umfasst,
und wobei der zumindest eine Lichtleiter (320) zumindest einen Auskoppelabschnitt (330) zur Auskopplung zumindest eines Teils des eingekoppelten Lichtes umfasst,
wobei die Beleuchtungseinheit (200) auf einer der Sichtseite abgewandten Seite an dem Emblemkörper (100) angeordnet ist, wobei die Lichtleiteranordnung (300) im Wesentlichen der Form des Emblems (50) folgt, und wobei der Emblemkörper (100) einen Rand (110) aufweist, welcher die maximale Ausdehnung des Emblemkörpers (100) in Lichteinkoppelrichtung (L1) bestimmt,
und wobei der Auskoppelabschnitt (330) des zumindest einen Lichtleiters (320) dem Rand (110) des Emblemkörpers (100) in Lichteinkoppelrichtung (L1) vorsteht, sodass Licht quer zur Lichteinkoppelrichtung (L1) aus dem Lichtleiter (320) auskoppelbar ist,
**dadurch gekennzeichnet, dass**
der zumindest eine Lichtleiter (320) Streupartikel umfasst, welche einen homogenen Leuchteindruck des aus dem zumindest einen Lichtleiter (320) auskoppelbaren Lichts ermöglichen, wobei die Streupartikel (320) als im Lichtleiter homogen verteilte Streupartikel ausgebildet sind.

2. Baugruppe nach Anspruch 1, **dadurch gekennzeichnet, dass** die Beleuchtungseinheit (200) zumindest eine Umlenkeinrichtung (400) umfasst, welche zur Umlenkung des eingekoppelten Lichtes zu dem zumindest einen Auskoppelabschnitt (330) des Lichtleiters vorgesehen ist, wobei die Umlenkeinrichtung (400) zumindest eine Reflexionsfläche (410) umfasst, welche dem zumindest einen Lichtleiter (320) zugeordnet ist und eingerichtet ist, das in einer Lichteinkoppelrichtung (L1) eingekoppeltes Licht der zumindest einen Lichtquelle (210) durch Reflexion in eine Umlenkrichtung (L2) im Lichtleiter (320) umzulenken.

3. Baugruppe nach Anspruch 1 oder 2, **dadurch gekennzeichnet, dass** der zumindest eine Auskoppelabschnitt (330) des zumindest einen Lichtleiters (320) als Randbereich der Lichtleiteranordnung (300) dem Emblemkörper (100) quer zur Lichteinkoppelrichtung (L1) der Lichtquelle übersteht.

4. Baugruppe nach einem der Ansprüche 1 bis 3, **dadurch gekennzeichnet, dass** der zumindest eine Lichtleiter (320) als bögenförmiger Lichtleiter ausgebildet ist.

5. Baugruppe nach einem der Ansprüche 1 bis 4, **dadurch gekennzeichnet, dass** der Einkoppelabschnitt (310) als Kollimator ausgebildet ist.

6. Baugruppe nach einem der Ansprüche 2 bis 5, **dadurch gekennzeichnet, dass** die zumindest eine Umlenkeinrichtung (400) vier Reflexionsflächen (410) aufweist, wobei jeder Reflexionsfläche (410) ein Lichtleiter (320) zugeordnet ist.

7. Baugruppe nach Anspruch 6, **dadurch gekennzeichnet, dass** die Umlenkeinrichtung (400) als vierseitige Pyramide ausgebildet ist, wobei die Reflexionsflächen (410) als Seiten der Pyramide ausgebildet sind.

8. Baugruppe nach einem der Ansprüche 1 bis 7, **dadurch gekennzeichnet, dass** die Baugruppe (10) zumindest einen Stecker zur elektrischen Kontaktierung umfasst, welcher Stecker sich in Richtung der Lichteinkoppelrichtung (L1) erstreckt und an einen Gegenstecker eines Kraftfahrzeugs ansteckbar ist.

9. Baugruppe nach einem der Ansprüche 1 bis 8, **dadurch gekennzeichnet, dass** die zumindest eine Lichtquelle (210) als LED ausgebildet ist.

10. Baugruppe nach einem der Ansprüche 1 bis 9, **dadurch gekennzeichnet, dass** die zumindest eine Lichtquelle (210) auf einer Leiterplatte (220) angeordnet ist, wobei die Leiterplatte (220) zwischen der Lichtleiteranordnung (300) und dem Emblemkörper (100) angeordnet ist.

11. Baugruppe nach einem der Ansprüche 1 bis 10, **dadurch gekennzeichnet, dass** die Lichteinkoppelrichtung (L1) und die Umlenkrichtung (L2) orthogonal zueinander ausgerichtet sind.

12. Baugruppe nach einem der Ansprüche 1 bis 11, **dadurch gekennzeichnet, dass** der zumindest eine Lichtleiter (320) zumindest abschnittsweise mit einer reflektierenden metallischen Oberfläche versehen ist.

13. Baugruppe nach Anspruch 12, **dadurch gekennzeichnet, dass** der zumindest eine Lichtleiter (320) auf einer der Sichtseite abgewandten Seite mit einer reflektierenden metallischen Oberfläche versehen ist.

14. Kraftfahrzeug mit zumindest einer Baugruppe gemäß einem der Ansprüche 1 bis 13.

## Claims

1. Assembly (10) for the illuminated display of an emblem (50) for a motor vehicle, comprising:
- an emblem body (100) which has an opaque emblem (50) on a visible side,
- a lighting unit (200) comprising
- at least one light source (210),
- a light guide arrangement (300) for guiding the light that can be emitted by the at least one light source (210) and coupled into the light guide arrangement (300), wherein the light guide arrangement (300) for coupling in light has at least one coupling section (310) associated with the at least one light source (210), and at least one light guide (320) extending from the coupling section (310),
and wherein the at least one light guide (320) comprises at least one decoupling section (330) for decoupling at least part of the coupled light,
wherein the lighting unit (200) is arranged on the emblem body (100) on a side facing away from the visible side, wherein the light guide arrangement (300) essentially follows the shape of the emblem (50), and wherein the emblem body (100) has an edge (110) which determines the maximum extension of the emblem body (100) in the light coupling direction (L1),
and wherein the decoupling section (330) of the at least one light guide (320) protrudes from the edge (110) of the emblem body (100) in the light coupling direction (L1), so that light can be decoupled from the light guide (320) transversely to the light coupling direction (L1),
**characterized in that**
the at least one light guide (320) comprises scattering particles which enable a homogeneous luminous impression of the light that can be decoupled from the at least one light guide (320), wherein the scattering particles (320) are designed as scattering particles distributed homogeneously in the light guide.

2. Assembly according to claim 1, **characterized in that** the lighting unit (200) comprises at least one deflection device (400) which is provided for deflecting the coupled light to the at least one coupling-out section (330) of the light guide, wherein the deflection device (400) comprises at least one reflective surface (410) which is associated with the at least one light guide (320) and is arranged to deflect the light coupled in a light coupling direction (L1) from the at least one light source (210) by reflection into a deflection direction (L2) in the light guide (320).

3. Assembly according to claim 1 or 2, **characterized in that** the at least one decoupling section (330) of the at least one light guide (320) protrudes from the emblem body (100) transversely to the light coupling direction (L1) of the light source as an edge region of the light guide arrangement (300).

4. Assembly according to one of claims 1 to 3, **characterized in that** the at least one light guide (320) is designed as a curved light guide.

5. Assembly according to one of claims 1 to 4, **characterized in that** the coupling section (310) is designed as a collimator.

6. Assembly according to one of claims 2 to 5, **characterized in that** the at least one deflection device (400) has four reflective surfaces (410), wherein each reflective surface (410) is assigned a light guide (320).

7. Assembly according to claim 6, **characterized in that** the deflection device (400) is designed as a four-sided pyramid, wherein the reflective surfaces (410) are designed as sides of the pyramid.

8. Assembly according to one of claims 1 to 7, **characterized in that** the assembly (10) comprises at least one plug for electrical contacting, which plug extends in the direction of the light coupling direction (L1) and can be plugged into a mating plug of a motor vehicle.

9. Assembly according to one of claims 1 to 8, **characterized in that** the at least one light source (210) is designed as an LED.

10. Assembly according to one of claims 1 to 9, **characterized in that** the at least one light source (210) is arranged on a printed circuit board (220), wherein the printed circuit board (220) is arranged between the light guide arrangement (300) and the emblem body (100).

11. Assembly according to one of claims 1 to 10, **characterized in that** the light coupling direction (L1) and the deflection direction (L2) are aligned orthogonally to each other.

12. Assembly according to one of claims 1 to 11, **characterized in that** the at least one light guide (320) is provided with a reflective metallic surface at least in sections.

13. Assembly according to claim 12, **characterized in that** the at least one light guide (320) is provided with a reflective metallic surface on a side facing away from the visible side.

14. Motor vehicle with at least one assembly according to one of claims 1 to 13.

## Revendications

1. Module (10) pour la représentation éclairée d'un emblème (50) pour un véhicule automobile, comprenant :
- un corps d'emblème (100) qui présente un emblème opaque (50) sur un côté visible,
- une unité d'éclairage (200) comprenant
- au moins une source lumineuse (210),
- un agencement de guides de lumière (300) pour guider la lumière pouvant être émise par la au moins une source lumineuse (210) et pouvant être couplée dans l'agencement de guides de lumière (300), l'agencement de guides de lumière (300) comprenant, pour le couplage de la lumière, au moins une section de couplage (310) qui est associée à la au moins une source lumineuse (210) et au moins un guide de lumière (320) qui s'étend à partir de la section de couplage (310),
et dans lequel le au moins un guide de lumière (320) comprend au moins une section de découplage (330) pour découpler au moins une partie de la lumière couplée,
l'unité d'éclairage (200) est disposée sur le corps d'emblème (100) sur un côté opposé au côté visible, l'agencement de guides de lumière (300) suivant essentiellement la forme de l'emblème (50), et le corps d'emblème (100) présentant un bord (110) qui détermine l'extension maximale du corps d'emblème (100) dans la direction de couplage de la lumière (L1),
et dans lequel la section de découplage (330) dudit au moins un guide de lumière (320) dépasse du bord (110) du corps d'emblème (100) dans la direction de couplage de la lumière (L1), de sorte que la lumière peut être découplée du guide de lumière (320) transversalement à la direction de couplage de la lumière (L1),
**caractérisé en ce que**
le au moins un guide de lumière (320) comprend des particules de diffusion qui permettent un effet lumineux homogène de la lumière pouvant être découplée du au moins un guide de lumière (320), les particules de diffusion (320) étant conçues comme des particules de diffusion réparties de manière homogène dans le guide de lumière.

2. Module selon la revendication 1, **caractérisé en ce que** l'unité d'éclairage (200) comprend au moins un dispositif de déviation (400) qui est prévu pour dévier la lumière couplée vers la au moins une section de découplage (330) du guide de lumière, le dispositif de déviation (400) comprenant au moins une surface de réflexion (410) qui est associée au moins à un guide de lumière (320) et qui est conçue pour dévier la lumière couplée dans une direction de couplage de lumière (L1) provenant d'au moins une source de lumière (210) par réflexion dans une direction de déviation (L2) dans le guide de lumière (320).

3. Module selon la revendication 1 ou 2, **caractérisé en ce que** la au moins une section de découplage (330) du au moins un guide de lumière (320) dépasse du corps d'emblème (100) transversalement à la direction de couplage de lumière (L1) de la source de lumière en tant que zone périphérique de l'agencement de guides de lumière (300).

4. Module selon l'une des revendications 1 à 3, **caractérisé en ce que** le au moins un guide de lumière (320) est conçu comme un guide de lumière courbé.

5. Module selon l'une des revendications 1 à 4, **caractérisé en ce que** la section de couplage (310) est conçue comme un collimateur.

6. Module selon l'une des revendications 2 à 5, **caractérisé en ce que** le au moins un dispositif de déviation (400) comporte quatre surfaces réfléchissantes (410), un guide de lumière (320) étant associé à chaque surface réfléchissante (410).

7. Module selon la revendication 6, **caractérisé en ce que** le dispositif de déviation (400) est conçu comme une pyramide à quatre côtés, les surfaces réfléchissantes (410) étant conçues comme des côtés de la pyramide.

8. Module selon l'une des revendications 1 à 7, **caractérisé en ce que** l'ensemble (10) comprend au moins un connecteur pour la connexion électrique, lequel connecteur s'étend dans la direction d'injection de lumière (L1) et peut être branché sur un connecteur correspondant d'un véhicule automobile.

9. Module selon l'une des revendications 1 à 8, **caractérisé en ce que** la au moins une source lumineuse (210) est conçue comme une LED.

10. Module selon l'une des revendications 1 à 9, **caractérisé en ce que** la au moins une source lumineuse (210) est disposée sur une carte de circuit imprimé (220), la carte de circuit imprimé (220) étant disposée entre l'agencement de guides de lumière (300) et le corps d'emblème (100).

11. Module selon l'une des revendications 1 à 10, **caractérisé en ce que** la direction de couplage de la lumière (L1) et la direction de déviation (L2) sont orientées orthogonalement l'une par rapport à l'autre.

12. Module selon l'une des revendications 1 à 11, **caractérisé en ce que** le ou les guides de lumière (320) sont pourvus, au moins par sections, d'une surface métallique réfléchissante.

13. Module selon la revendication 12, **caractérisé en ce que** le au moins un guide de lumière (320) est pourvu d'une surface métallique réfléchissante sur un côté opposé au côté visible.

14. Véhicule automobile avec au moins un module selon l'une des revendications 1 à 13.
